# EUROPÄISCHE PATENTSCHRIFT

(11) **EP 0 933 281 B1**
(45) Veröffentlichungstag und Bekanntmachung des Hinweises auf die Patenterteilung: **06.05.2004**
(21) Anmeldenummer: 99100740.2
(22) Anmeldetag: 15.01.1999
(51) Int. Cl.: B62B 3/06

(54) **Flurförderzeug, insbesondere Palettenhubwagen oder Komissionierfahrzeug**
Industrial truck especially pallet or load truck
Chariot de manutention en particulier chariot élévateur pour pallettes ou autres charges

(30) Priorität: 30.01.1998 DE 19803706
(43) Veröffentlichungstag der Anmeldung: 04.08.1999
(73) Patentinhaber: STILL S.A.R.L., 77100 Meaux (FR)
(72) Erfinder: Abonnet, Jacques, St. Laurent, 58200 Cosne/Loire (FR)
(74) Vertreter: Kasseckert, Rainer

(56) Entgegenhaltungen:
- DE-A- 4 408 293
- DE-A- 4 410 935
- US-A- 4 601 480

## Beschreibung

Die Erfindung betrifft ein Flurförderzeug, insbesondere Palettenhubwagen oder Kommissionierfahrzeug, mit einem anhebbaren Lastaufnahmemittel, wobei ein lastseitiges Ende des Lastaufnahmemittels derart ausgebildet ist, daß Transportmittel, insbesondere Paletten und/oder Rollcontainer, mit dem Lastaufnahmemittel unterfahren und mittels des Lastaufnahmemittels angehoben werden können, wobei auf dem Lastaufnahmemittel mindestens eine dauerhafte Markierung angebracht ist, deren Abstand zu dem lastseitigen Ende des Lastaufnahmemittels im wesentlichen der Länge des Transportmittels entspricht.

Bei Flurförderzeugen dieser Bauart handelt es sich in der Regel um Palettenhubwagen oder um Kommissionierfahrzeuge. Mit dem Lastaufnahmemittel, das häufig als Lastgabel ausgeführt ist, können Lasten unterschiedlicher Art angehoben und transportiert werden. Die Lasten sind dabei häufig von hinsichtlich ihrer Abmessungen genormten Transportmitteln, insbesondere von Paletten oder Rollcontainern gebildet.

Paletten und Rollcontainer sind in Lagerräumen häufig hintereinander, aneinander anschließend aufgestellt. Der Bedienperson eines gattungsgemäßen Flurförderzeugs stellt sich häufig die Aufgabe, genau eine Palette oder genau einen Rollcontainer mit dem Flurförderzeug aufzunehmen. In der betrieblichen Praxis kommt es hierbei häufig vor, daß die Palette bzw. der Rollcontainer nicht vollständig unterfahren wird. Nach dem anschließenden Anheben des Lastaufnahmemittels befindet sich die Palette bzw. der Rollcontainer in einer instabilen oder schrägen Position was letztlich zu einer Beschädigung der zu transportierenden Last führen kann.

Ein anderer, bei der obengenannten Aufgabe häufig auftretender Fehler besteht darin, daß mit dem Lastaufnahmemittel zu weit unter die Palette oder unter den Rollcontainer eingefahren wird, so daß sich das lastseitige Ende des Lastaufnahmemittels bereits unter der nächsten Palette bzw. unter dem nächsten Rollcontainer befindet. Wenn daraufhin das Lastaufnahmemittel angehoben wird, führt dies häufig zu einer Beschädigung dieser nächsten Palette oder dieses nächsten Rollcontainers, im Extremfall sogar zu einem Verbiegen des Lastaufnahmemittels.

Ein weiterer regelmäßig auftretender Fehler besteht darin, daß mit dem Lastaufnahmemittel genau so weit in eine Palette mit geschlossenen Bodenbrettern eingefahren wird, daß sich die unterhalb des Lastaufnahmemittels angeordneten Lastrollen genau auf einem der durchgehenden Bodenbretter befindet. Wenn das Lastaufnahmemittel dann angehoben wird, wird die Palette gesprengt.

Um dies zu verhindern, ist aus der DE 44 08 293 A1 sowie der DE 44 10 935 A1 bekannt, einen Anschlag vorzusehen, um ein zu weites Einführen des Lastaufnahmemittels in die Palette zu verhindern.

DE 44 10 935 A1 offenbart einen ausklappbaren Anschlag, der jedoch nur für die Aufnahme einer Vierseitpalette in Querstellung den korrekten Abstand zur Spitze des Lastaufnahmemmittels aufweist. Die Aufnahme von Transportmitteln mit unterschiedlichen Abmessungen oder mehrerer Transportmittel ist nicht vorgesehen.

DE 44 08 293 A1 zeigt einen auf das Lastaufnahmemmittel aufschraubbaren Anschlag, bei dem das eigentliche Anschlagelement in Abhängigkeit vom verwendeten Transportmittel anzuschrauben ist. Mit einer solchen Anschlagvorrichtung kann ohne Umschrauben des Anschlagelements immer nur jeweils eine Art von Transportmittel verwendet werden. Da der Anschlag nicht dauerhaft am Lastaufnahmemittel angebracht ist, muss die korrekte Position des Anschlags bei der Montage durch eine Bedienperson berücksichtigt werden.

Bei langen Lastaufnahmmitteln, die das Aufnehmemn mehrerer Transportmittel ermöglichen, muss zudem ein Lastaufnahemmittel gemäß DE 44 08 293 A1 oder DE 44 10 935 A1 immer so weit eingeführt werden, dass das Transportmittel am Anschlag ansteht. Dies erschwert den Lastaufnahmevorgang bei einzeln stehenden Transportmitteln zusätzlich. Bei hintereinander stehenden Transportmitteln kann das Lastaufnahmemittel gar nicht bis zum Anschlag eingeführt werden, ohne hinter dem aufzunehmenden Transoprtmittel stehende, weitere Transportmittel ebenfalls mit dem Lastaufnahmemmittel zu erfassen.

Der vorliegenden Erfindung liegt daher die Aufgabe zugrunde, ein Flurförderzeug, bei dem auf dem Lastaufnahmemittel mindestens eine dauerhafte Markierung angebracht ist, deren Abstand zu dem lastseitigen Ende des Lastaufnahmemittels im wesentlichen der Länge des Transportmittels entspricht, zur Verfügung zu stellen, mit dem Transportmittel unterschiedlicher Abmessungen einfach, sicher und ohne Beschädigung der Transportmittel, der Last oder der Lastaufnahmevorrichtung aufgenommen und befördert werden können.

Diese Aufgabe wird erfindungsgemäß dadurch gelöst, daß für Transportmittel unterschiedlicher Länge jeweils unterschiedliche Markierungen vorgesehen sind.

Die Bedienperson fährt mit dem Flurförderzeug bis zu der dem zu transportierenden Transportmittel entsprechenden Markierung in das Transportmittel, in der Regel eine Palette oder ein Rollcontainer, ein. Das lastseitige Ende des Lastaufnahmemittels schließt dann exakt mit der aufzunehmenden Palette oder dem aufzunehmenden Rollcontainer ab. Wenn das Lastaufnahmemittel dann angehoben wird, ist sichergestellt, daß die Palette oder der Rollcontainer von dem Lastaufnahmemittel auf der ganzen Länge unterstützt ist, gleichzeitig aber keine weitere Palette und kein weiterer Rollcontainer ungewollt mit angehoben wird. Die Dauerhaftigkeit der Markierung stellt sicher, daß die genannten Vorteile der Erfindung auch nach längerem Gebrauch des Flurförderzeugs noch uneingeschränkt nutzbar sind. Da für die gebräuchlichsten Transportmittel bereits dauerhafte Markierungen angebracht sind, muss die Bedienperson keine Einstellung auf das Transportmittel vornehmen.

Diese Aufgabe wird erfindungsgemäß auch dadurch gelöst, daß auf dem Lastaufnahmemittel mehrere dauerhafte Markierungen angebracht sind, deren Abstände zu dem lastseitigen Ende des Lastaufnahmemittels im wesentlichen einem ganzzahligen Vielfachen der Länge des Transportmittels entsprechen. Diese weiteren Markierungen werden dann als Maß für die Einfahrtiefe verwendet, wenn gleichzeitig mehrere gleichartige Transportmittel vom Boden aufgenommen werden sollen.
Es ist daher möglich, bei hintereinander stehenden Transportmitteln nur die gewünschte Anzahl mit dem Lastaufnahmemmittel zu erfassen, ohne dahinter stehende Transportmittel ebenfalls anzuheben.

Zweckmäßig ist es, wenn die Markierung auf der Oberseite des Lastaufnahmemittels angeordnet ist. Die Markierung ist dann von jedem denkbaren Standort der Bedienperson erkennbar.

Wenn die Markierung von einer Öffnung in der Oberfläche des Lastaufnahmemittels gebildet ist, ergibt sich der Vorteil, daß die Markierung auch nach intensivem Gebrauch des Flurförderzeugs, wenn beispielsweise eine Lackierung des Lastaufnahmemittels schon stark beschädigt ist, noch deutlich erkennbar ist.

Die erfindungsgemäße Markierung ist besonders einfach anbringbar, wenn das Lastaufnahmemittel aus Blech ausgebildet ist und die Markierung von einer Öffnung dieses Blechs gebildet ist. Die Markierung kann beispielsweise durch Stanzen, Nippeln oder Laserschneiden in das Blech eingebracht werden.

Besonders einfach sind die unterschiedlichen Markierungen für Paletten und Rollcontainer voneinander zu unterscheiden, wenn die Markierungen die Form von Buchstaben aufweisen. Es bietet sich hierbei an, für Paletten den Buchstaben "B" und für Rollcontainer den Buchstaben "R" vorzusehen.

Es ist zweckmäßig, wenn der Abstand der Markierung für einen Rollcontainer zu dem lastseitigen Ende des Lastaufnahmemittels in einem Bereich zwischen 700 Millimeter und 740 Millimeter, insbesondere bei 715 Millimeter, bzw. einem ganzzahligen Vielfachen dieser Entfernungen liegt.

Es ist ebenfalls zweckmäßig, wenn der Abstand der Markierung für eine Palette zu dem lastseitigen Ende des Lastaufnahmemittels in einem Bereich zwischen 1180 Millimeter und 1220 Millimeter, insbesondere bei 1200 Millimeter, bzw. einem ganzzahligen Vielfachen dieser Entfernungen liegt.

Die für die Markierungen maßgebliche Länge eines genormten Rollcontainers beträgt im wesentlichen 715 Millimeter. Die maßgebliche Länge einer Palette beträgt im wesentlichen 1200 Millimeter.

Weitere Vorteile und Einzelheiten der Erfindung werden anhand des in den schematischen Figuren dargestellten Ausführungsbeispiels näher erläutert. Dabei zeigt
- Fig. 1: ein erfindungsgemäßes Flurförderzeug mit einer aufgenommenen Palette,
- Fig. 2: ein erfindungsgemäßes Flurförderzeug mit einem aufgenommenen Rollcontainer,
- Fig. 3: ein erfindungsgemäßes Flurförderzeug mit drei aufgenommenen Rollcontainern,
- Fig. 4: ein markiertes Lastaufnahmemittel.

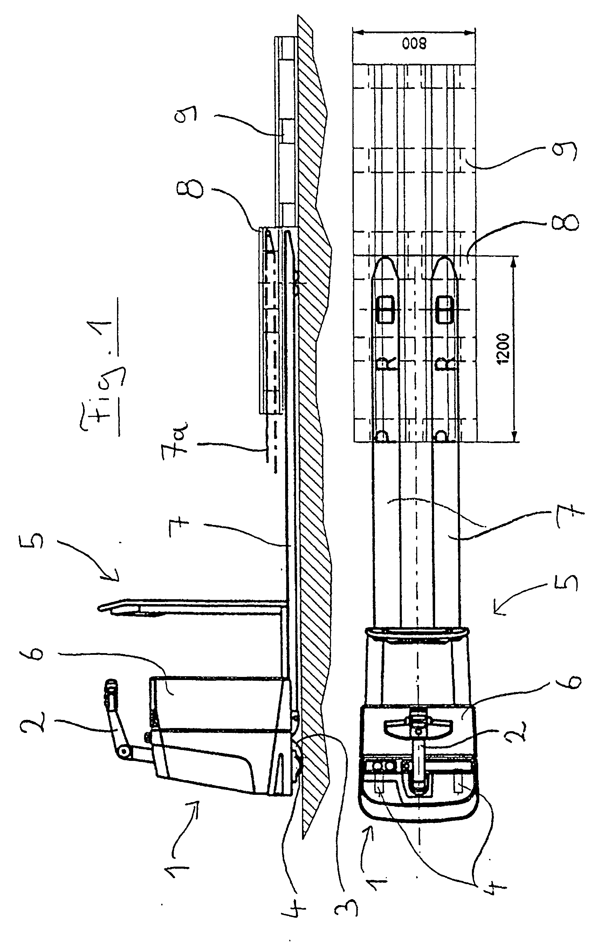

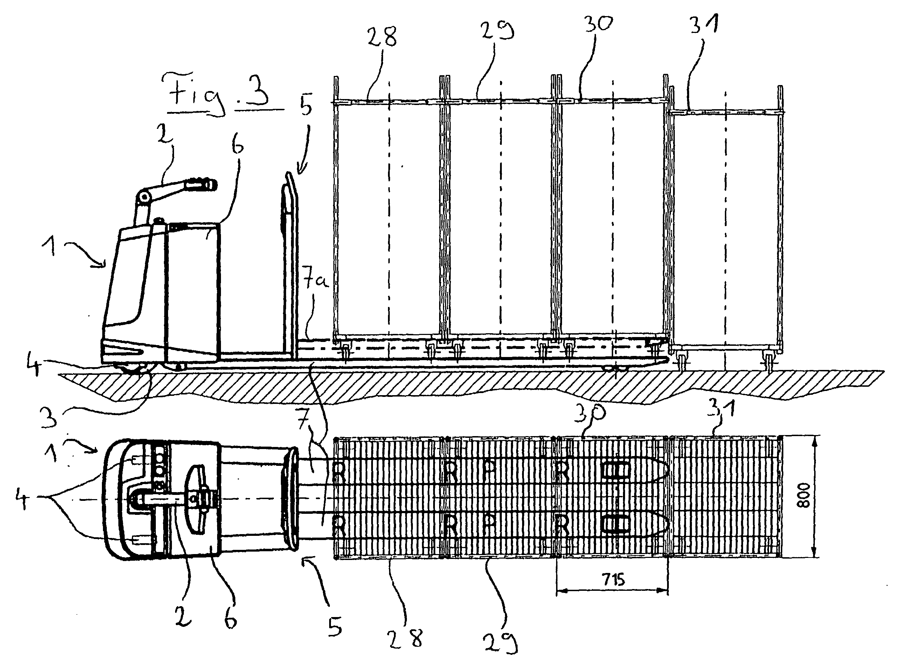

Figur 1 zeigt als erfindungsgemäßes Flurförderzeug einen Niederhubkommissionierer in Seitenansicht (oben) und in Draufsicht (unten). Der Niederhubkommissionierer weist einen nicht höhenbeweglichen Antriebsteil 1 auf, an dem unter anderem eine Steuerdeichsel 2, ein lenkbares Antriebsrad 3 und zwei Schwenkrollen 4 angebracht sind. Ein höhenbeweglicher Lastteil 5 umfaßt einen Batterieblock 6, einen Fahrerstand sowie ein als Lastgabel ausgeführtes Lastaufnahmemittel 7. Die angehobene Position des Lastaufnahmemittels 7 ist in der Seitenansicht mit gestrichelten Linien 7a angedeutet.

In der Draufsicht sind die erfindungsgemäß in Buchstabenform gestalteten Markierungen "P" und "R" erkennbar, wobei der Abstand der Markierung "P" zu dem lastseitigen Ende der Lastaufnahmevorrichtung 7 den Abstand von ungefähr 1200 mm aufweist. Dieser Abstand von 1200 mm entspricht der Länge einer Normpalette. Wie zu erkennen ist, schließt das lastseitige Ende des Lastaufnahmemittels 7 mit dem Ende der Palette 8 ab, wenn in die Palette 8 exakt bis zu der Markierung "P" eingefahren wird. Hierdurch ist sichergestellt, daß die Palette 8 von dem Lastaufnahmemittel 7 vollständig unterstützt ist. Gleichzeitig ist gewährleistet, daß eine zweite Palette 9 bei einem Anheben des Lastaufnahmemittels 7 nicht mit angehoben wird.

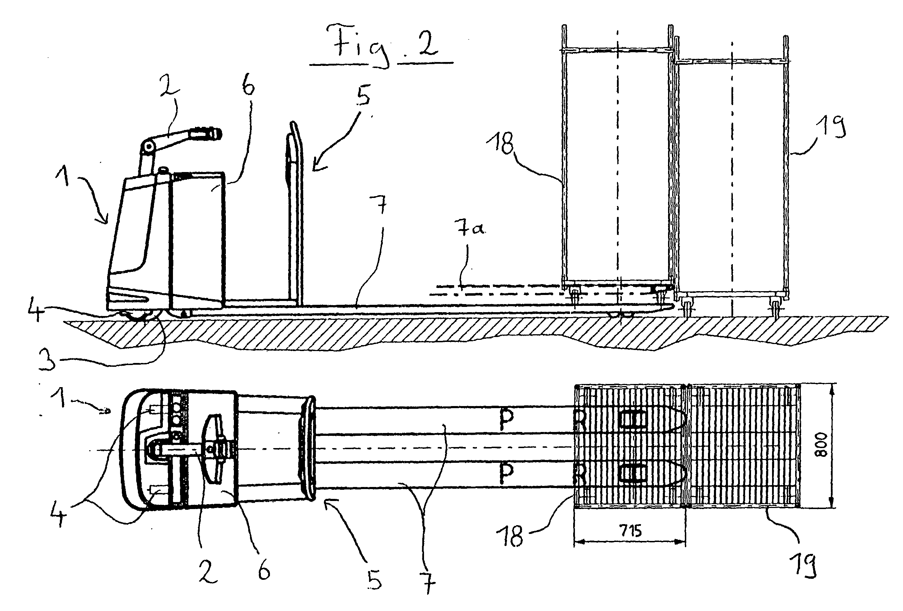

Figur 2 zeigt einen Niederhubkommissionierer in Seitenansicht (oben) und in Draufsicht (unten) bei der Handhabung von Rollcontainern 18, 19. Der Abstand der Markierung "R" von dem Lastseitigen Ende der Lastaufnahmevorrichtung entspricht mit 715 mm der Länge eines genormten Rollcontainers. Wenn in den Rollcontainer 18 exakt bis zu der Markierung "R" eingefahren wird ist sichergestellt, daß der Rollcontainer 18 von dem Lastaufnahmemittel 7 vollständig unterstützt ist. Gleichzeitig ist gewährleistet, daß ein zweiter Rollcontainer 19 bei einem Anheben des Lastaufnahmemittels 7 nicht mit angehoben wird.

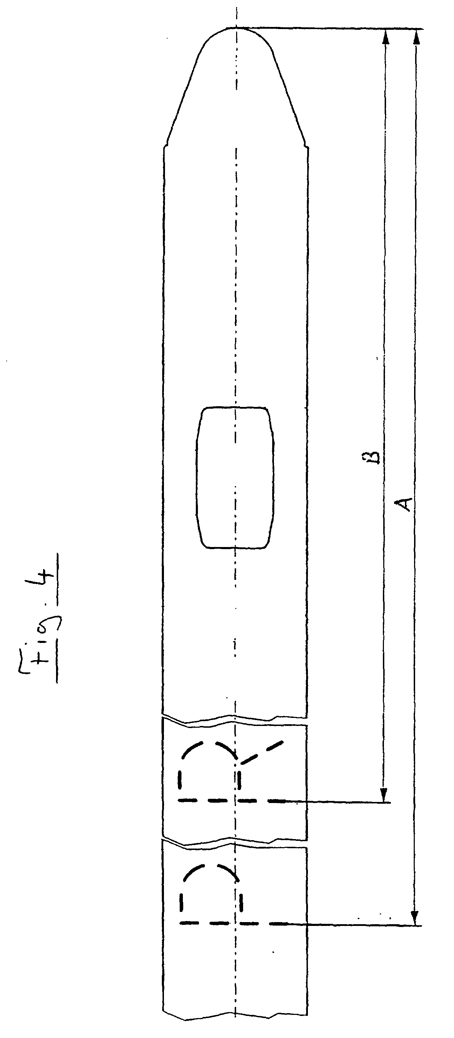

Figur 3 zeigt einen Niederhubkommissionierer, bei dem auf dem Lastaufnahmemittel 7 mehrere Markierungen "R" bzw. "P" angebracht sind, deren Abstände zu dem lastseitigen Ende des Lastaufnahmemittels 7 den ganzzahligen Vielfachen der Länge eines Rollcontainers bzw. der Länge einer Palette entsprechen. In dem gezeigten Beispiel befinden sich auf dem Lastaufnahmemittel 7 drei Rollcontainer 28, 29, 30, wobei der Rollcontainer 30 genau oberhalb des lastseitigen Endes des Lastaufnahmemittels 7 abschließt. Der Rollcontainer 31 wird von dem Lastaufnahmemittel 7 nicht beeinflußt.

Figur 4 zeigt einen Abschnitt des Lastaufnahmemittels 7 mit den Markierungen "R" und "P". Die Markierungen sind von Durchbrechungen des Materials der Lastgabel gebildet und wurden bei der Herstellung des Lastaufnahmemittels 7 durch Laserschneiden eingebracht. Das Abstandsmaß A der Markierung "P" zu dem lastseitigen Ende des Lastaufnahmemittels beträgt zwischen 1180 mm und 1220 mm, vorzugsweise zwischen 1190 mm und 1210 mm. Das Abstandsmaß B der Markierung "R" zu dem lastseitigen Ende des Lastaufnahmemittels beträgt zwischen 700 mm und 740 mm, vorzugsweise zwischen 710 mm und 730 mm.

## Patentansprüche

1. Flurförderzeug, insbesondere Palettenhubwagen oder Kommissionierfahrzeug, mit einem anhebbaren Lastaufnahmemittel (7), wobei ein lastseitiges Ende des Lastaufnahmemittels (7) derart ausgebildet ist, daß Transportmittel, insbesondere Paletten (8) und/oder Rollcontainer (18), mit dem Lastaufnahmemittel (7) unterfahren und mittels des Lastaufnahmemittels (7) angehoben werden können, wobei auf dem Lastaufnahmemittel (7) mindestens eine dauerhafte Markierung angebracht ist, deren Abstand zu dem lastseitigen Ende des Lastaufnahmemittels (7) im wesentlichen der Länge des Transportmittels entspricht, **dadurch gekennzeichnet, daß** für Transportmittel unterschiedlicher Länge jeweils unterschiedliche Markierungen vorgesehen sind.

2. Flurförderzeug, insbesondere Palettenhubwagen oder Kommissionierfahrzeug, mit einem anhebbaren Lastaufnahmemittel (7), wobei ein lastseitiges Ende des Lastaufnahmemittels (7) derart ausgebildet ist, daß Transportmittel, insbesondere Paletten (8) und/oder Rollcontainer (18), mit dem Lastaufnahmemittel (7) unterfahren und mittels des Lastaufnahmemittels (7) angehoben werden können, wobei auf dem Lastaufnahmemittel (7) mindestens eine dauerhafte Markierung angebracht ist, deren Abstand zu dem lastseitigen Ende des Lastaufnahmemittels (7) im wesentlichen der Länge des Transportmittels entspricht, **dadurch gekennzeichnet, daß** auf dem Lastaufnahmemittel (7) mehrere dauerhafte Markierungen angebracht sind, deren Abstände zu dem lastseitigen Ende des Lastaufnahmemittels (7) im wesentlichen einem ganzzahligen Vielfachen der Länge des Transportmittels entsprechen.

3. Flurförderzeug nach Anspruch 1 oder 2, **dadurch gekennzeichnet, daß** die Markierung auf der Oberseite des Lastaufnahmemittels (7) angeordnet ist.

4. Flurförderzeug nach einem der Ansprüche 1 bis 3, **dadurch gekennzeichnet, daß** die Markierung von einer Öffnung in der Oberfläche des Lastaufnahmemittels (7) gebildet ist.

5. Flurförderzeug nach Anspruch 4, **dadurch gekennzeichnet, daß** das Lastaufnahmemittel (7) aus Blech ausgebildet ist und die Markierung von einer Öffnung dieses Blechs gebildet ist.

6. Flurförderzeug nach einem der Ansprüche 1 bis 5, **dadurch gekennzeichnet, daß** die Markierungen die Form von Buchstaben aufweisen.

7. Flurförderzeug nach einem der Ansprüche 1 bis 6, **dadurch gekennzeichnet, daß** der Abstand der Markierung für einen Rollcontainer zu dem lastseitigen Ende des Lastaufnahmemittels in einem Bereich zwischen 700 Millimeter und 740 Millimeter, insbesondere bei 715 Millimeter, bzw. einem ganzzahligen Vielfachen dieser Entfernungen liegt.

8. Flurförderzeug nach einem der Ansprüche 1 bis 7, **dadurch gekennzeichnet, daß** der Abstand der Markierung für eine Palette zu dem lastseitigen Ende des Lastaufnahmemittels in einem Bereich zwischen 1180 Millimeter und 1220 Millimeter, insbesondere bei 1200 Millimeter, bzw. einem ganzzahligen Vielfachen dieser Entfernungen liegt.

## Claims

1. Industrial truck, especially pallet truck or order-picking truck, having a load-lifting means (7) which can be raised, a load end of the load-lifting means (7) being formed in such a way that transport means, especially pallets (8) and/or roller containers (18) can be driven under with the load-lifting means (7) and can be raised by means of the load-lifting means (7), at least one permanent marking being applied to the load-lifting means (7), whose distance from the load end of the load-lifting means (7) substantially corresponds to the length of the transport means, **characterized in that** in each case different markings are provided for transport means of different length.

2. Industrial truck, especially pallet truck or order-picking truck, having a load-lifting means (7) which can be raised, a load end of the load-lifting means (7) being formed in such a way that transport means, especially pallets (8) and/or roller containers (18) can be driven under with the load-lifting means (7) and can be raised by means of the load-lifting means (7), at least one permanent marking being applied to the load-lifting means (7), whose distance from the load end of the load-lifting means (7) substantially corresponds to the length of the transport means, **characterized in that** a plurality of permanent markings are applied to the load-lifting means (7), whose distances from the load end of the load-lifting means (7) substantially correspond to an integer multiple of the length of the transport means.

3. Industrial truck according to Claim 1 or 2, **characterized in that** the marking is arranged on the upper side of the load-lifting means (7).

4. Industrial truck according to one of Claims 1 to 3, **characterized in that** the marking is formed by an opening in the surface of the load-lifting means (7).

5. Industrial truck according to Claim 4, **characterized in that** the load-lifting means (7) is formed of sheet metal and the marking is formed by an opening in this sheet metal.

6. Industrial truck according to one of Claims 1 to 5, **characterized in that** the markings have the form of letters.

7. Industrial truck according to one of Claims 1 to 6, **characterized in that** the distance of the marking for a roller container from the load end of the load-lifting means is in a range between 700 millimetres and 740 millimetres, in particular at 715 millimetres, or an integer multiple of these distances.

8. Industrial truck according to one of Claims 1 to 7, **characterized in that** the distance of the marking for a pallet from the load end of the load-lifting means is in a range between 1180 millimetres and 1220 millimetres, in particular at 1200 millimetres, or an integer multiple of these distances.

## Revendications

1. Chariot de manutention, notamment chariot élévateur à palettes ou chariot de préparation de commandes, comprenant un moyen de réception de charge levable (7), une extrémité du côté de la charge du moyen de réception de la charge (7) étant réalisée de telle sorte que le moyen de réception de la charge (7) puisse passer sous des moyens de transport, notamment des palettes (8) et/ou des conteneurs roulants (18) et que ceux-ci puissent être soulevés au moyen du moyen de réception de charge (7), au moins un marquage durable étant prévu sur le moyen de réception de charge (7), dont la distance à l'extrémité du côté de la charge du moyen de réception de charge (7) correspond essentiellement à la longueur du moyen de transport, **caractérisé en ce que** l'on prévoit à chaque fois des marquages différents pour des moyens de transport de longueurs différentes.

2. Chariot de manutention, notamment chariot élévateur à palettes ou chariot de préparation de commandes, comprenant un moyen de réception de charge levable (7), une extrémité du côté de la charge du moyen de réception de la charge (7) étant réalisée de telle sorte que le moyen de réception de la charge (7) puisse passer sous des moyens de transport, notamment des palettes (8) et/ou des conteneurs roulants (18) et que ceux-ci puissent être soulevés au moyen du moyen de réception de charge (7), au moins un marquage durable étant prévu sur le moyen de réception de charge (7), dont la distance à l'extrémité du côté de la charge du moyen de réception de charge (7) correspond essentiellement à la longueur du moyen de transport, **caractérisé en ce que** plusieurs marquages durables sont prévus sur le moyen de réception de la charge (7), dont les distances aux extrémités du côté de la charge du moyen de réception de la charge (7) correspondent essentiellement à un multiple entier de la longueur du moyen de transport.

3. Chariot de manutention selon la revendication 1 ou 2, **caractérisé en ce que** le marquage est disposé sur le côté supérieur du moyen de réception de la charge (7).

4. Chariot de manutention selon l'une quelconque des revendications 1 à 3, **caractérisé en ce que** le marquage est formé par une ouverture dans la surface du moyen de réception de la charge (7).

5. Chariot de manutention selon la revendication 4, **caractérisé en ce que** le moyen de réception de la charge (7) est réalisé en tôle et le marquage est formé par une ouverture de cette tôle.

6. Chariot de manutention selon l'une quelconque des revendications 1 à 5, **caractérisé en ce que** les marquages présentent la forme de lettres.

7. Chariot de manutention selon l'une quelconque des revendications 1 à 6, **caractérisé en ce que** la distance du marquage pour un conteneur roulant à l'extrémité du côté de la charge du moyen de réception de la charge est comprise dans une plage de 700 millimètres à 740 millimètres, notamment est de 715 millimètres, ou constitue un multiple entier de ces distances.

8. Chariot de manutention selon l'une quelconque des revendications 1 à 7, **caractérisé en ce que** la distance du marquage pour une palette à l'extrémité du côté de la charge du moyen de réception de la charge est comprise dans une plage de 1180 millimètres à 1220 millimètres, notamment est de 1200 millimètres, ou constitue un multiple entier de ces distances.
